**Europäisches Patentamt**

**European Patent Office**

**Office européen des brevets**

(11) Veröffentlichungsnummer: **0 167 994**
**A2**

## (12) EUROPÄISCHE PATENTANMELDUNG

(21) Anmeldenummer: **85108318.8**

(22) Anmeldetag: **05.07.85**

(51) Int. Cl.⁴: **A 23 C 13/12**
**B 65 D 71/02**

(30) Priorität: **11.07.84 DE 3425585**

(43) Veröffentlichungstag der Anmeldung:
**15.01.86 Patentblatt 86/3**

(84) Benannte Vertragsstaaten:
**AT BE CH DE FR GB IT LI LU NL**

(71) Anmelder: **Renn, Willi**
**Hauptstrasse 59**
**D-7218 Trossingen 1(DE)**

(72) Erfinder: **Renn, Willi**
**Hauptstrasse 59**
**D-7218 Trossingen 1(DE)**

(74) Vertreter: **Bierl, Richard, Dr. rer. nat., Dipl.-Phys.**
**Hauptstrasse 32/1**
**D-7218 Trossingen 1(DE)**

(54) **Rahmgericht-Ausgangssubstanz zur Weiterverarbeitung in Konditorei, Bäckerei oder Haushalt.**

(57) Eine Rahmgericht-Ausgangssubstanz zur Weiterverarbeitung in Konditorei, Bäckerei oder Haushalt, die für geläufige Verfahren und/oder Hilfsmittel bzw. Geräte des einschlägigen Standes der Technik zur Verarbeitung in einem einzigen Arbeitsgangs zu einem Fertiggericht geeignet ist, ist infolge ihrer Zusammensetzung ausschließlich aus (a) Rahm von mindestens 28% bis 32% und höchstens 35% bis 40% Fettgehalte, (b) wobei der Rahm einen weiteren Anteil überwiegend der Art eines Dispersionsmittels, und darin Fettkügelchen in Form von Molekülaggregaten, vorwiegend von der Größe 10⁻⁴ bis 10⁻¹ μm, mit hoher Adsorptions-Fähigkeit enthält und somit einen mindestens teil-homogenisierten kolloidalen Zustand aufweist, (c) und einer Geschmacks-Grundmasse, gegebenenfalls in Verbindung mit Zucker, einem Lösungsmittel, od.dgl., ("fond"), durch deren Zusatz zu Rahm dessen vorbeschriebener hoch-kolliodaler Zustand in ausreichend hohem Grade erhalten bleibt, (d) mit den vorbeschriebenen einfachen Mitteln zur unmittelbaren Formung in standfeste und gleichbleibende Aufschlags-Qualität von bleibender und somit schnittfester Raumform-beständiger Gestalt in unveränderter Zusammensetzung bringbar.

EP 0 167 994 A2

Croydon Printing Company Ltd

)IPLOMPHYSIKER DR. RER. NAT. RICHARD BIERL

0167994

PATENTANWALT

:ANZLEIADRESSE · HAUPTSTRASSE 32 · 7218 TROSSINGEN 1

als VERTRETER zugelassen
beim Europäischen Patentamt
D-8000 München

— \ —

"Rahm-Schnellgericht EU"
Fa. Willi Renn, 7218 Trossingen 1
17 o2o1-1 / Dr.Bi/bp / o4.o7.85
korrespondierend zu DE P 34 25 585.o

Willi Renn
Konditormeister

Hauptstraße 59

7218 Trossingen 1

Rahmgericht-Ausgangssubstanz
zur Weiterverarbeitung in
Konditorei, Bäckerei oder Haushalt

Die Erfindung betrifft eine Rahmgericht-Ausgangssubstanz zur Weiterverarbeitung in Konditorei, Bäckerei oder Haushalt, die für dem dort tätigen Durchschnittsfachmann geläufige Verfahren und/oder Hilfsmittel bzw. Geräte des Standes der Technik zur Verarbeitung in einem einzigen Arbeitsgang zwecks sofortigen Verzehrs oder Zwischenlagerung sowohl in gefrorenem als auch ungefrorenem Zustand geeignet ist.

In der Konditor-Branche und auf verwandten Nahrungsmittel-Anwendungs-Gebieten, dh. auch im Lebensmittel-Handel für den Bedarf von privaten Haushalten, besteht seit langem das Bedürfnis, eine Rahmgerichts-Ausgangssubstanz zur Verfügung zu haben, die sich zuverlässig, dh. auch bei ungünstigen klimatischen Verhältnissen, sogar nach einer gewissen Lagerung usw. in gleichbleibender Qualität und Haltbarkeit, dh. standfest schlagen läßt, ohne daß irgendwelche Binde- oder Standmittel, vor allem Gelatine, Phosphate oder gar andere, bzw. sogar synthetische Zutaten als Bindemittel zugefügt werden. Ohne Bindemittel läßt sich normaler Rahm, unter ungünstigen Bedingungen sogar H-Rahm, oft nur in unbefriedigender Qualität schlagen oder anderweitig - allenfalls bedingt standfest - zu Schlagsahne verarbeiten, die meistens schon nach kurzer Zeit gerinnt, die enthaltene Molke ausscheidet und eine flüssige Ausscheidung am Boden bildet. Der Zusatz von gewissen Binde- und Standmitteln ist aber nach dem Lebensmittelgesetz anzeigepflichtig, so daß viele Verbraucher sich vom Kauf solcher Rahmsorten abhalten lassen, oder beim Schlagen von Sahne auf Binde- oder Standmittel, dh. zwangsweise auf die Herstellung von Sahne überhaupt verzichten, es sei denn, es handelt sich um lediglich aufführungspflichtige Binde- oder Standmittel, die nachträglich zugesetzt werden, aber einen zusätzlichen Arbeitsgang erfordern.

Besonders problematisch sind diese Verhältnisse dann, wenn ein Natur-Rahm, zB. direkt - falls nicht staatliche Vorschriften dem entgegenstehen - von einem landwirtschaftlichen Betrieb, oder auch von einem Milchwerkbetrieb gelieferter H-Rahm mit Geschmackszusätzen gemischt wird, weil dann der Rahm entweder überhaupt nicht schlagfähig ist oder keine Standfestigkeit besitzt. Auch Rahm mit ziemlich hohem Fettgehalt, zB. über 35 %, läßt sich bei Zusatz von Geschmacksstoffen nur kurzfristig aufschlagen, es sei denn, man verwendet die schon erwähnten, aber den Geschmack verändernden und auch die Verkaufsmöglichkeiten einschränkenden Bindemittel. Im übrigen ist, wie schon erwähnt, die Verarbeitung außerordentlich unsicher, abgesehen davon, daß bei der Herstellung von Mischungen, insoweit sie überhaupt möglich sind, mehrere Arbeitsgänge erforderlich sind.

Der vorliegenden Erfindung liegt deshalb die Aufgabe zugrunde, ein Rahm-Produkt herzustellen, das sich in einfacher Weise mit den in Konditorei-Fachbetrieben und für Hausfrauen in privaten Haushalten üblichen Mitteln, zB. Schlaggeräten, Sahneblasegeräten, Verschäumungs-Apparaten od.dgl. ohne Zusatz von irgendwelchen Bindemitteln in einem Arbeitsgang zu standfester Schlagsahne bzw. einem standfesten Sahneerzeugnis mit guter und gleichmäßiger Aufschlagsqualität und Haltbarkeit, sowie unmittelbar an die Verarbeitung anschließender Schnittfestigkeit, Verzehrbarkeit usw. und schließlich Lagerfähigkeit - auch bei Zusatz von Geschmacksmitteln - verarbeiten und in vielfacher Art und Form gestalten läßt.

Die vorbeschriebene Aufgabe wird bei einer Rahmgericht-Ausgangssubstanz mit den Teilmerkmalen des 1. Anspruchs durch deren Kombination mit den Teilmerkmalen des kennzeichnenden Teils des 1.Anspruchs gelöst. Eine besonders ausgeprägte Wirksamkeit dieser Lehre wird dadurch herbeigeführt, daß der verwendete Rahm nach einem auf diesem Fachgebiet üblichen Ultra-Hochtemperatur-Prozeß (UHT-Verfahren) - durch eine Sterilisierung mittels indirekter Erhitzung bei einer Temperatur von 13o bis 15o° C, eine Rückkühlung bei 55 bis 1o° C, eine Entgasung bei o,7 bis o,9 bar und gleicher Temperatur, Verminderung des ursprünglichen Wassergehalts um mindestens annähernd 3,5 %, eine Homogenisierung bei einer Temperatur von 45 bis 5o°C und einem Speisedruck von 45 bis 55 bar, sowie eine Abkühlung auf eine Temperatur von 3 bis 5° C, mit zugehörigen Verweilungszeiten von 1 Sec. bis 5 Sec. einzelner Verfahrensabschnitte - vorbehandelt ist. Dadurch ist nämlich gewährleistet, daß der Fettanteil und der Dispersions-Anteil Viskositäten erhalten haben, deren Temperatur-Koeffizienten in dem erwähnten Temperatur-Teilbereich deutlich verschieden sind, insbesondere derjenige des Fettanteils größer ist als derjenige des Dispersionsanteils, und laut Teilmerkmal (c) die Geschmacksgrundmasse infolgedessen die hochkolloidale Beschaffenheit des Rahms nicht einschränken kann.

Die Rahmgericht-Ausgangssubstanz gemäß der Lehre des 1.Anspruchs vermittelt den technischen Fortschritt, daß nach einem einzigen Arbeitsgang im Anschluß an die Entnahme von einem Lager oder dem Einkauf bzw. der Entnahme aus einem privaten Haushalts-Kühlschrank sofort verzehrbar, in schnittfähige Raumform bringbar und lagerfähig, außerdem wegen seiner festen Form bzw. bleibender Gestalt auch kombinierbar mit anderen Nahrungsmitteln ist. Sie ist nämlich nach der Herstellung in einem Milchverwertungs-Betrieb auch für den Detailverkauf in beliebigen Geschäften verwendbar und zu anderen Arten, dh. auch mit vielfachen Geschmackszusätzen zu versehen, sowie in seperaten Verpackungen oder Kombinations-Packungen, dh. vor allem letzteres in optimalen Mischungsverhältnissen verkaufbar.

Der erzielbare technische Fortschritt bezieht sich somit vorrangig auf die Erleichterung der Handhabung vor dem Verzehr - ohne Änderung der Zusammensetzung - im besonderen auf die Verwendung der Rahmgerichts-Ausgangssubstanz als Gebrauchsgegenstand und zwar als Qualitäts-konstanter Gebrauchsgegenstand unter Erzielung und Verbesserung seiner Schnittfestigkeit, sowohl gefroren als auch halbgefroren usw., die bessere Lagerung in einem einzigen Arbeitsgang.

Die Rahmgericht-Ausgangssubstanz ist besonders vorteilhaft für klassische Anwendungsfälle des Konditorwesens, wie zB. standfähige Kirsch-, Mokka-, Schoko- und Himbeer- oder Käse-Sahne-Torte, die alle sofort nach dem Mischen des Rahms und der Geschmacksmasse nach Verarbeitung, zB. dem Schlagen, in fester Form, dh. von bleibender Gestalt und somit schnittfest sind, wobei das Fertigprodukt sowohl sofort verzehrt, als auch gekühlt oder ungekühlt gelagert werden kann. Das geschlagene Endprodukt ist ferner ohne weitere Verarbeitung verwendbar für jegliche Art von Tortenfüllungen, dh. in Verbindung mit Tortenböden oder Zwischenböden. Schließlich ist es verwendbar auch als Dessert allein oder in Kombination mit Pudding, Früchten oder Gebäck.

In allen diesen Fällen ist die Forderung nach Standfestigkeit, erhöhter Haltbarkeit und Aufschlags-Qualität ohne Stabilisatoren, Bindemittel erfüllt. Letzten Endes wird durch die angegebene Lehre somit auch eine Kostenersparnis erzielt.

- 6 -

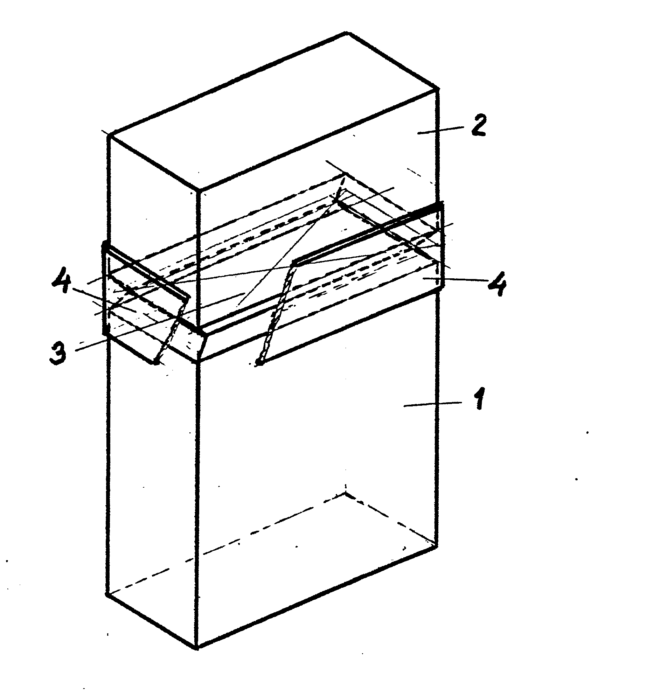

Weiterbildungen der Erfindung sind Gegenstand des Unteranspruchs. Im folgenden ist als Ausführungsbeispiel der Erfindung eine kubische kombinierte Kartonpackung für die beiden Komponenten anhand der Zeichnung beschrieben:

Die kombinierte Kartonpackung ist aus dem oberen kubischen Behälter (1) und dem unteren (2) so zusammengesetzt, daß die Unterflächen des einen (1) an die Oberfläche des anderen (2) bündig angepaßt ist und beide Behälter, die in der in der Marktbranche der Milcherzeugnisse üblichen Verpackungstechnik aus außenwachsbeschichtetem, hochglanzpoliertem, flüssigkeits- und gasdichtem, porendicht verschlossenem bzw. beschichtet versiegeltem Pappkarton hergestellt sind, durch den mit Markierungen versehbaren Klebestreifen lösbar verbunden sind. Dabei bleiben die Behälter 1 und 2, von denen der eine (2) die eine Komponente (Rahm) gemäß Anspruch 1 (a) und (b) und der anderen (1) die andere Komponente (Geschmacks-Grundmasse) gemäßt Anspruch 1 (c) enthält, zunächst verschlossen.

Für die Verarbeitung werden bei dieser Art der Verpackung zur Endverarbeitung beide Behälter geöffnet und ihr Inhalt gemischt, dabei in üblicher Weise der Konditorei-Technik, zB. durch Schlagen, in einem einzigen Arbeitsgang zu einem fertigen Rahmgericht, das auch sofort weiterverarbeitbar ist durch Zusammensetzung mit vorgebackenen Schichten, zB. Tortenböden, fertig, dh. zum Verzehr oder zur Lagerung brauchbar verarbeitet.

In einer alternativen Verpackungsart können

"Rahm-Schnellgericht EU"
Fa. Willi Renn, 7218 Trossingen 1
17 o2o1-1 / Dr.Bi/bp / o4.o7.85

0167994

- ʒ -

die beiden Komponenten in üblicher Weise in einem gemeinsamen Karton, im übrigen gleicher Ausführung wie vorbeschrieben, verpackt werden, wenn sie vor dem Verpackungs-
Arbeitsgang gemäß der Vorschrift von Anspruch 2 vorbehandelt sind.

**DIPLOMPHYSIKER DR. RER. NAT. RICHARD BIERL**

**PATENTANWALT**

KANZLEIADRESSE · HAUPTSTRASSE 32 · 7218 TROSSINGEN 1

als VERTRETER zugelassen
beim Europäischen Patentamt
D-8000 München

"Rahm-Schnellgericht EU"
Fa. Willi Renn, 7218 Trossingen 1
17 o2o1-1 / Dr.Bi/bp / o4.o7.85
korrespondierend zu DE P 34 25 585.o

~ | ~

Ansprüche
Seite 1

P a t e n t a n s p r ü c h e

1. Rahmgericht-Ausgangssubstanz,

zur Weiterverarbeitung in Konditorei, Bäckerei oder Haushalt, die für dem dort tätigen Durchschnittsfachmann geläufige Verfahren und/oder Hilfsmittel bzw. Geräte des Standes der Technik zur Verarbeitung in einem einzigen Arbeitsgangs zwecks sofortigen Verzehrs oder Zwischenlagerung sowohl in gefrorenem als auch ungefrorenem Zustand geeignet ist,

dadurch gekennzeichnet, daß sie infolge ihrer Zusammensetzung ausschließlich aus

(a) Rahm von mindestens 28% bis 32% und höchstens 35% bis 4o% Fettgehalte,

(b) wobei der Rahm einen weiteren Anteil überwiegend der Art eines Dispersionsmittels, wie Emulsions-

Rahm-Schnellgericht EU"
1. Willi Renn, 7218 Trossingen 1
' o2o1-1 / Dr.Bi/bp / o4.o7.85

0167994

Ansprüche
Seite 2

- 2 -

und andere Kolloide, Emulsoide, mit Eiweißkörpern, Kasein, od.dgl., und darin Fettkügelchen in Form von Molekülaggregaten, vorwiegend von der Größe $10^{-4}$ bis $10^{-1}$ µm, mit infolge deren großer Oberfläche hoher Adsorptions-Fähigkeit enthält und somit einen mindestens teil-homogenisierten kolloidalen Zustand aufweist,

(c) und einer Geschmacks-Grundmasse, gegebenenfalls in Verbindung mit Zucker, einem Lösungsmittel, od.dgl., ("fond") besteht, deren Mischung aus Nahrungsmittel-Rohstoffen so beschaffen ist, daß durch ihren Zusatz zu Rahm dessen vorbeschriebener hoch-kolliodaler Zustand in ausreichend hohem Grade erhalten bleibt,

(d) und mit den vorbeschriebenen einfachen Mitteln zur unmittelbaren Formung in standfeste und gleichbleibende Aufschlags-Qualität von bleibender und somit schnittfester Raumform-beständiger Gestalt in unveränderter Zusammensetzung bringbar ist.

2. Rahmgericht-Ausgangssubstanz nach Anspruch 1,

dadurch gekennzeichnet, daß der verwendete Rahm nach einem auf diesem Fachgebiet üblichen Ultra-Hochtemperatur-Prozeß (UHT-Verfahren)

durch einen Sterilisierungsabschnitt mittels indirekter Erhitzung bei einer Temperatur von 13o bis 15o° C, einen Rückkühlabschnitt bei 45 bis 55° C, einen Entga-

- 3 -

"Rahm-Schnellgericht EU"
Fa. Willi Renn, 7218 Trossingen 1
17 o2o1-1 / Dr.Bi/bp / o4.o7.85

0167994

Ansprüche
Seite 3

- 3 -

sungsabschnitt bei o,7 bis o,9 bar und einer Temperatur von 55 bis 1o° C, Verminderung des ursprünglichen Wassergehalts um mindestens annähernd 3,5 %, Homogenisierung bei einer Temperatur von 45 bis 5o° C und einem Speisedruck von 45 bis 55 bar und einen Abkühlabschnitt auf eine Temperatur von 3 bis 5° C des Aufbereitungs-Verfahrens, mit zu einzelnen Verfahrensabschnitten gehörenden Verweilzeiten zwischen 1 Sec. und 5 Sec.,

sowie anschließender Abfüllung in sterilisierte und hermetisch dicht schließende Behälter vorbehandelt ist, so daß der Fettanteil und der Dispersions-Anteil Viskositäten besitzen, deren Temperatur-Koeffizienten in dem erwähnten Temperatur-Teilbereich deutlich verschieden sind, insbesondere derjenige des Fettanteils größer ist als derjenige des Dispersionsanteils.

3. Rahmgericht-Ausgangssubstanz nach einem der Ansprüche 1 und 2,

dadurch gekennzeichnet, daß das Mischungs-Verhältnis von Rahm und Geschmacks-Grundmasse dem Anteil des Fettgehalts am Rahm direkt proportional ist, insbesondere in der Größenordnung "1 zu 3" bei hohem Fettgehalt bis "1 zu 5" bei niedrigem Fettgehalt.

4. Rahmgericht-Ausgangssubstanz nach einem der Ansprüche 1 bis 3,

- 4 -

"Rahm-Schnellgericht EU"
Fa. Willi Renn, 7218 Trossingen 1
17 o2o1-1 / Dr.Bi/bp / o4.o7.85

0167994
Ansprüche
Seite 4

- 4 -

dadurch gekennzeichnet, daß ihre beiden Komponenten stofflich getrennt, aber räumlich kombiniert in einer gemeinsamen Kartonpackung aus auf dem Gebiet der Milch-, Rahm- od.dgl. Erzeugnisse an sich bekanntem, außenwachsbeschichtetem, hochgranzpoliertem, flüssigkeits- und gasdichtem, porendicht verschlossenem bzw. beschichtet versiegeltem Pappkarton der Form von mindestens zwei kubischen bzw. zylindrischen Behältern (1, 2) steril und hermetisch verschlossen verpackt sind, von denen jeweils eine Außenfläche (3) bezüglich ihrer Abmessungen aneinander angepaßt sind, so daß die beiden Behälter durch einen mit Markierungen versehbaren Klebestreifen (4) an dessen Außenfläche verbindbar und jeweils ohne Beschädigung einzelner Teilgehäuse voneinander trennbar sind.